# EUROPÄISCHE PATENTSCHRIFT

(11) **EP 2 607 892 B1**
(45) Veröffentlichungstag und Bekanntmachung des Hinweises auf die Patenterteilung: **09.01.2019**
(21) Anmeldenummer: 13159234.7
(22) Anmeldetag: 11.08.2011
(51) Int. Cl.: G01N 25/18

(54) **Verfahren zur Bestimmung von Wärme- und Temperaturleitfähigkeiten einer Messprobe**
Method for determining the thermal and temperature conductivity of a sample
Procédé pour déterminer la conductivité thermique et la conductibilité thermique d'un échantillon de mesure

(30) Priorität: 13.08.2010 DE 102010036992
(43) Veröffentlichungstag der Anmeldung: 26.06.2013
(62) Teilanmeldung aus: 11757191.9
(73) Patentinhaber: Technische Universität Darmstadt, 64289 Darmstadt (DE)
(72) Erfinder: Sass, Ingo, 64625 Bensheim (DE); Seehaus, Rainer, 64291 Darmstadt (DE); Buss, Arne, 10829 Berlin (DE); Stegner, Johannes, 64283 Darmstadt (DE)
(74) Vertreter: Katscher Habermann Patentanwälte

(56) Entgegenhaltungen:
- DE-A1- 10 258 817
- FR-A1- 2 643 717
- US-A- 3 733 887
- US-A- 6 142 662
- US-B1- 6 331 075
- HOSTLER S R ET AL: "Thermal conductivity of a clay-based aerogel", INTERNATIONAL JOURNAL OF HEAT AND MASS TRANSFER, PERGAMON PRESS, GB, Bd. 52, Nr. 3-4, 31. Januar 2009 (2009-01-31), Seiten 665-669, XP025817465, ISSN: 0017-9310, DOI: 10.1016/J.IJHEATMASSTRANSFER.2008.07.002 [gefunden am 2008-09-06]
- C. T. EWING ET AL: "Thermal Conductivity of Refactory Materials.", JOURNAL OF CHEMICAL & ENGINEERING DATA, Bd. 7, Nr. 2, 1. April 1962 (1962-04-01), Seiten 251-256, XP055015230, ISSN: 0021-9568, DOI: 10.1021/je60013a029

## Beschreibung

Die Erfindung betrifft ein Verfahren zur Bestimmung von Wärme- und Temperaturleitfähigkeiten einer Messprobe, wobei die Messprobe in einer plattenförmigen Messprobenkammer in Reihe mit einer Vergleichsprobenplatte zwischen einer ersten Heizplatte und einer zweiten Heizplatte angeordnet wird und wobei die Temperaturen T₁ und T₂ der ersten und der zweiten Heizplatte unabhängig voneinander vorgegeben und geregelt werden.

Aus der Praxis sind verschiedene Vorrichtungen und Verfahren bekannt, mit denen die Wärmeleitfähigkeit einer Messprobe ermittelt werden kann. Als Wärmeleitfähigkeit wird die Eigenschaft eines Probenmaterials bezeichnet, thermische Energie in Form von Wärme durch die Messprobe hindurch zu transportieren. Die Wärmeleitfähigkeit ist eine temperaturabhängige Materialkonstante und wird üblicherweise in W/(Km) angegeben. Die Temperaturleitfähigkeit ist ebenfalls eine temperaturabhängige Materialkonstante, mit der die Geschwindigkeit, mit der sich eine Temperaturveränderung in der Messprobe ausbreitet, charakterisiert werden kann. Die Temperaturleitfähigkeit ist nicht nur von der Wärmeleitfähigkeit, sondern unter anderem auch von der Dichte einer Messprobe und deren spezifischer Wärmekapazität abhängig.

Sowohl die Wärmeleitfähigkeit als auch die Temperaturleitfähigkeit sind beispielsweise wichtige Eigenschaften von Bodenproben, die im Rahmen von geothermischen Untersuchungen ermittelt und im Hinblick auf eine effiziente Nutzung geothermischer Energie ausgewertet werden können.

Bei einem aus der Praxis bereits bekannten Verfahren zur Bestimmung der Wärmeleitfähigkeit einer Messprobe wird die Messprobe zwischen zwei Heizplatten angeordnet und über die Heizplatten ein vorgegebener Wärmestrom durch die Messprobe erzeugt. Um sicherzustellen, dass der durch die Heizplatten erzeugte Wärmestrom vollständig durch die Messprobe fließt, sind zusätzliche Heizvorrichtungen mit komplexen elektronischen Regelungen erforderlich, die um die Messprobe herum angeordnet sind und Verlustwärmeströme verhindern sollen. Über die in den Heizplatten erzeugte Heizleistung und die sich in und um der Messprobe einstellenden Temperaturen kann die Wärmeleitfähigkeit berechnet werden.

Bei einem anderen, ebenfalls aus der Praxis bekannten Messverfahren wird die Messprobe zwischen zwei Referenzplatten mit einer bekannten Wärmeleitfähigkeit angeordnet, die wiederum zwischen Heizplatten angeordnet sind. In einem stationären Zustand werden Temperaturgradienten in den beiden Referenzplatten ermittelt und daraus die Wärmeleitfähigkeit der zwischen den Referenzplatten angeordneten Messprobe berechnet. Als Referenzplatten werden üblicherweise Quarzglasplatten verwendet. Der Einbau der Temperatursensoren in Quarzglasplatten ist aufwendig und kostenintensiv. Aus diesem Grund werden oftmals zusätzliche Kupferplatten benachbart zu den Quarzglasplatten angeordnet, in oder auf denen die Temperatursensoren eingebettet sind. Durch die zusätzlichen Kupferplatten wird der konstruktive Aufbau größer und durch zusätzliche Wärmeübergänge an den Grenzflächen die erreichbare Messgenauigkeit reduziert. Da die Quarzglasplatten nicht druckstabil sind, sondern bei ungleichmäßiger Druckbelastung leicht zerbrechen können, sind derartige Messvorrichtungen nicht dazu geeignet, die Wärmeleitfähigkeit einer Messprobe zu ermitteln, die einem erhöhten Druck ausgesetzt ist, wie er beispielsweise in großer Tiefe in dem Erdboden vorherrscht.

Ein ähnliches Messverfahren wird beispielsweise in US 6,142,662 A beschrieben. Die Messprobe wird zwischen zwei Stahlblöcken angeordnet, die einen stationären Wärmestrom erzeugen können. In den Stahlblöcken sind mehrere Temperatursensoren angeordnet, so dass über die Temperaturdifferenzen an den Grenzflächen der Messprobe deren Wärmeleitfähigkeit ermittelt werden kann.

Bei einem Verfahren der eingangs genannten Gattung, wie es beispielsweise in DE 102 58 817 B4 beschrieben ist, wird die Messprobe zwischen zwei jeweils beheizbaren Referenzplatten angeordnet. Die beiden Referenzplatten können von angrenzenden Heizplatten beheizt werden, die von einem Wärmeträgeröl durchströmt und Thermostaten auf eine vorgebbare Temperatur geheizt werden können. In den beiden Referenzplatten sind insgesamt drei Temperatursensoren angeordnet. Bei einer stationären Temperaturverteilung kann durch eine Auswertung der in den beiden Referenzplatten angeordneten Temperatursensoren die Wärmeleitfähigkeit der Messprobe bestimmt werden. Das in dieser Veröffentlichung beschriebene Messverfahren setzt einen stationären Zustand bzw. einen konstanten Wärmestrom durch die Messprobe voraus und ist deshalb nicht dafür geeignet, auch eine Temperaturleitfähigkeit der Messprobe.

Ein weiteres artverwandtes Verfahren wird in HOSTLER S.R. et al: "Thermal conductivity of a clay-based aerogel",INTERNATIONAL JOURNAL OF HEAT AND MASS TRANSFER, PERGAMON PRESS, GB, Bd. 52, Nr. 3-4, 31. Januar 2009 (2009-01-31), Seiten 665-669,beschrieben.

Es wird als eine Aufgabe der vorliegenden Erfindung angesehen, ein Verfahren zur Bestimmung der Wärmeleitfähigkeit so auszugestalten, dass mit geringem konstruktivem Aufwand eine möglichst rasche und genaue Bestimmung der Wärmeleitfähigkeit ermöglicht wird. Zudem soll in einfacher Weise auch eine Temperaturleitfähigkeitsbestimmung ermöglicht werden.

Diese Aufgabe wird erfindungsgemäß durch ein Verfahren entsprechend dem unabhängigen Anspruch 1 gelöst, wobei lediglich eine Temperatur T_{M} in der Mitte in einem kleinen Abstand dᵥ₁ zu der der Messprobe zugewandten Oberfläche der Vergleichsprobenplatte gemessen wird und die Wärmeleitfähigkeit oder die Temperaturleitfähigkeit der Messprobe in Abhängigkeit von den vorgegebenen Temperaturen T₁ und T₂, von dem vorgegebenen Abstand dᵥ₁ und von der gemessenen Temperatur T_{M} ermittelt wird.

Eine möglichst genaue Messung einer Wärmeleitfähigkeit oder einer Temperaturleitfähigkeit setzt idealerweise unendlich ausgedehnte Messprobenkammern und Vergleichsprobenplatten voraus, um störende Einflüsse von Randeffekten, von Wärmeverlusten sowie von Wärmeübergängen zwischen Grenzflächen zu vermeiden bzw. vernachlässigen zu können. Untersuchungen haben jedoch ergeben, dass bei Messprobenkammern und Vergleichsprobenplatten, die eine Dicke von einem bis einige Zentimeter aufweisen, bereits ein Durchmesser oder Seitenkantenlängen von 10 cm oder mehr ausreichen, um in der Mitte der Messprobenkammer und der Vergleichsprobenplatte einen Wärmestrom erzeugen zu könnten, der weitgehend unbeeinträchtigt von Randeffekten ist. Es hat sich gezeigt, dass die Ermittlung lediglich eines einzigen Temperaturwertes in der Mitte der Vergleichsprobenplatte in einem kleinen Abstand dᵥ₁ zu dieser Oberfläche ausreicht, um bei vorgegebenen Temperaturen der beiden Heizplatten eine ausreichend genaue Ermittlung von Werten für die Wärmeleitfähigkeit oder die Temperaturleitfähigkeit des Probenmaterials durchführen zu können. Da während der Durchführung einer Messung lediglich ein Temperaturwert T_{M} gemessen werden muss und die Temperaturen der Heizplatten in bekannter Weise auf vorgegebene Werte geregelt werden können, können die Messungen und deren Auswertungen sehr rasch und präzise durchgeführt werden. Weil neben der Temperaturregelung der Heizplatten lediglich ein Temperatursensor auf oder in der Vergleichsprobenplatte erforderlich ist und ausgewertet werden muss, ist der konstruktive Aufwand für die Durchführung eines derartigen Messverfahrens äußerst gering.

Das erfindungsgemäße Verfahren setzt lediglich voraus, dass durch die Heizplatten eine Oberfläche mit einer möglichst genau bekannten Temperatur vorgegeben wird. Diese Temperatur kann auch unterhalb der Umgebungstemperatur liegen, so dass die Heizplatten auch gekühlt werden und Temperaturen unterhalb der Umgebungstemperatur bzw. unter 0° Celsius vorgeben können. Es hat sich als besonders vorteilhaft herausgestellt, wenn die Heizplatten eine erste Temperatur größer als die Umgebungstemperatur und eine zweite Temperatur kleiner als die Umgebungstemperatur vorgeben, so dass die sich einstellenden Temperaturen in der Messprobe und in den Vergleichsplatten näherungsweise der Umgebungstemperatur entsprechen und deshalb nur äußerst geringe Wärmeverluste zur Umgebung hin entstehen.

Gemäß einer vorteilhaften Ausgestaltung des Erfindungsgedankens ist vorgesehen, dass die Temperaturen T₁ und T₂ der ersten und der zweiten Heizplatte konstant vorgegeben werden und dass während eines stationären Zustands die Temperatur T_{M} gemessen wird, um die Wärmeleitfähigkeit zu ermitteln. Um die Temperaturleitfähigkeit zu ermitteln ist erfindungsgemäß vorgesehen, dass mindestens eine der beiden Temperaturen T₁ und T₂ der ersten und der zweiten Heizplatte gemäß einem vorgegebenen Temperaturverlauf verändert wird und dabei die Temperatur T_{M} gemessen wird.

Da die Ermittlung der Wärmeleitfähigkeit einen stationären Zustand des zwischen Heizplatten erzeugten Wärmestroms voraussetzt, ist bereits ein einziger Messwert für die Temperatur T_{M} ausreichend, um die Wärmeleitfähigkeit der Messprobe berechnen zu können. Durch wiederholte Messung der Temperatur T_{M} kann die Präzision des mit diesem Messverfahren ermittelten Wertes für die Wärmeleitfähigkeit gesteigert werden.

Die Temperaturleitfähigkeit ist eine Kenngröße für die Eigenschaft einer Messprobe, wie schnell sich Temperaturänderungen innerhalb der Messprobe ausbreiten. Durch die Heizplatte werden Temperaturänderungen in der Messprobe vorgegeben. Es hat sich gezeigt, dass vorteilhafterweise die Temperatur T_{M} mehrfach in zeitlichen Abständen oder quasi kontinuierlich während der vorgegebenen Temperaturänderung gemessen wird, um aus der dadurch ermittelten zeitlichen Abhängigkeit der Temperaturänderungen die Temperaturleitfähigkeit zu ermitteln.

Einer besonders vorteilhaften Ausgestaltung des Erfindungsgedankens zu Folge ist vorgesehen, dass in einem ersten Verfahrensschritt mindestens eine Temperatur T₁ und T₂ der ersten und der zweiten Heizplatte gemäß einem vorgebbaren Temperaturverlauf verändert und dabei die Temperatur T_{M} gemessen wird und in einem nachfolgenden Verfahrensschritt die Temperaturen T₁ und T₂ der ersten und der zweiten Heizplatte konstant vorgegeben und die Temperatur T_{M} in einem stationären Zustand gemessen wird, um anschließend die Wärmeleitfähigkeit und in Kenntnis der Wärmeleitfähigkeit die Temperaturleitfähigkeit zu ermitteln. Auf diese Weise wird eine besonders rasche Durchführung beider Messungen ermöglicht. Insbesondere wird der Zeitraum, der für das Erreichen eines stationären Zustandes für die Messung der Wärmeleitfähigkeit erforderlich ist, bereits für die Ermittlung der Temperaturmesswerte benutzt, die für die Berechnung der Temperaturleitfähigkeit herangezogen werden können. Zudem kann auf diese Weise festgestellt und überwacht werden, dass tatsächlich ein stationärer Zustand der Temperaturverteilung und damit des Wärmestroms erreicht wurde, bevor die Messungen für die Wärmeleitfähigkeit durchgeführt werden. Bei der Auswertung der Messergebnisse kann zunächst die Wärmeleitfähigkeit berechnet werden, um anschließend durch eine Auswertung der während der vorausgegangenen Temperaturänderung gemessenen Messwerte die Temperaturleitfähigkeit zu ermitteln. Es ist ebenfalls denkbar, die Wärmeleitfähigkeit und die Temperaturleitfähigkeit mit anderen Methoden zu ermitteln. Lediglich beispielhaft wird auf bereits bekannte Verfahren verwiesen, bei denen periodische Temperaturschwingungen erzeugt und die sich einstellenden Temperaturen zeitabhängig ausgewertet werden. Ein solches Messverfahren wird in "Eine einfache Methode zur Bestimmung der Temperaturleitzahl mit Temperaturschwingungen", S. Prinzen et al., Wärme- und Stoffübertragung 25, 209-214, 1990, Springer-Verlag 1990, beschrieben. Das vorangehend beschriebene Messverfahren kann in einfacher Weise an derartige Auswertemethoden adaptiert werden.

In vorteilhafter Weise ist vorgesehen, dass auf die Messprobe während der Messung ein vorgebbarer Druck ausgeübt wird. Dadurch können Umgebungsbedingungen für die Messprobe erzeugt werden, wie sie beispielsweise bei einer Tiefe von mehreren zehn bis mehreren hundert Metern im Erdboden vorherrschen. Auf diese Weise können die Wärmeleitfähigkeit und die Temperaturleitfähigkeit von Bodenproben unter realistischen Bedingungen gemessen werden. Eine ansonsten übliche Messung unter Laborbedingungen und die anschließend erforderliche Umrechnung unter Berücksichtigung von realistischen Umgebungsbedingungen ist nicht notwendig, so dass in der Regel empirisch ermittelte Umrechnungsfaktoren und Schätzungen nicht in die Ermittlung der Wärmeleitfähigkeit und der Temperaturleitfähigkeit eingehen müssen, wodurch die Genauigkeit bei der Ermittlung der Wärmeleitfähigkeit gesteigert werden kann.

Es ist ebenso denkbar und für verschiedene Anwendungsfälle vorteilhaft, dass die Messprobe während der Messung einen vorgebbaren Wassergehalt aufweist. Insbesondere bei der Bestimmung von Lockergesteinen oder porösen Bodenproben, die in natürlichen Umgebungsbedingungen regelmäßig nicht vollständig trocken sind, sondern einen bei der Probenentnahme ermittelbaren Wassergehalt aufweisen, kann auf diese Weise die tatsächlich vor Ort gegebene Wärmeleitfähigkeit und Temperaturleitfähigkeit der Bodenprobe ermittelt werden.

Eine Vorrichtung zur Bestimmung von Wärmeleitfähigkeiten und Temperaturleitfähigkeiten einer Messprobe, mit der das vorangehend beschriebene Verfahren durchgeführt werden kann, weist eine erste Heizplatte und eine zweite Heizplatte, eine plattenförmige Probenkammer und eine Vergleichsprobenplatte auf, wobei die Messprobenkammer und die Vergleichsprobenplatte in Reihe zwischen den beiden Heizplatten angeordnet sind, wobei ein Temperatursensor in oder auf der Vergleichsprobenplatte mittig angeordnet ist, und wobei die Temperatur T₁ der ersten Heizplatte und die Temperatur T₂ der zweiten Heizplatte unabhängig voneinander mittels eines Thermostaten regelbar sind.

In vorteilhafter Weise ist vorgesehen, dass die Vergleichsprobenplatte aus einem Kunststoffmaterial besteht, in das ein homogen verteiltes Füllmaterial mit einer Wärmeleitfähigkeit von mehr als 1 W/(Km) eingebettet ist. Üblicherweise weisen die beispielsweise bei geologischen Untersuchungen entnommenen Bodenproben Wärmeleitfähigkeiten im Bereich von etwa 1 W/(Km) bis etwa 10 W/(Km) auf. Die aus dem Stand der Technik bekannten Messvorrichtungen, bei denen Vergleichsprobenplatten aus einem Kunststoffmaterial verwendet werden, weist das Kunststoffmaterial regelmäßig eine Wärmeleitfähigkeit von etwa 0,1 - 0,2 W/(Km) auf. Da sich in diesen Fällen die Wärmeleitfähigkeiten der Vergleichsprobenplatten jeweils um etwa eine Größenordnung von der noch zu ermittelnden Wärmeleitfähigkeit der Messprobe unterscheiden, wirkt sich dieses Verhältnis nachteilig auf den Vergleich der Messprobe mit der Vergleichsprobe und dadurch letztendlich auf die Genauigkeit der Messungen aus.

Es sind auch Messvorrichtungen aus der Praxis bekannt, bei denen mehrere Vergleichsprobenplatten aus Quarzglas verwendet werden, deren Wärmeleitfähigkeit näherungsweise mit der zu ermittelnden Wärmeleitfähigkeit der Messproben vergleichbar ist. Die Quarzglasplatten sind jedoch äußerst druckempfindlich und schwer zu handhaben. Eine Druckbeaufschlagung der Messprobe während der Durchführung der Messungen ist nicht oder nur bedingt möglich. Die Anbringung eines Temperatursensors in oder auf einer Quarzglasplatte ist materialbedingt mit einem erheblichen Fertigungsaufwand verbunden. Aus diesem Grund ist es auch aus der Praxis bekannt, die Temperatursensoren in oder unmittelbar auf Kupferplatten anzuordnen, die ihrerseits zusätzlich zwischen den Quarzglasplatten und der Messprobe, bzw. den Heizplatten anzuordnen. Die Temperaturgradienten sind innerhalb der Kupferplatten oftmals vernachlässigbar. Allerdings wird durch die Verwendung von zusätzlichen Kupferplatten die Gesamtdicke der Messvorrichtung erhöht. Insbesondere werden zusätzliche Grenzflächen zwischen dem Material der Kupferplatten und dem angrenzenden Material erzeugt. Durch diese Umstände wird die maximal erreichbare Genauigkeit der Messungen erheblich reduziert. Wenn zu viele einzelne Schichten mit unterschiedlichem Material und jeweils mit Grenzflächen in der Messvorrichtung vorgesehen sind, wird die Ermittlung einer Temperaturleitfähigkeit nahezu unmöglich.

Durch die Verwendung eines mit einem geeigneten Füllmaterial angereicherten Kunststoffmaterials kann die Wärmeleitfähigkeit des Kunststoffmaterials in den für die meisten Messungen bzw. Messproben relevanten Bereich nahezu beliebig vorgegeben und an den erwarteten Wert der Wärmeleitfähigkeit der Messprobe angepasst werden. Mit einem geeigneten Füllmaterial und Herstellungsverfahren kann die Wärmeleitfähigkeit des Kunststoffmaterials beispielsweise in einem Bereich zwischen 0,8 W/(Km) und 1,4 W/(Km) und darüber hinaus variiert, bzw. vorgegeben werden. Die Vergleichsprobenplatte aus Kunststoff ist unempfindlich gegenüber Druck oder Feuchtigkeit und kann nach Abschluss einer Messung leicht gereinigt werden. Ein Temperatursensor kann entweder bereits während der Herstellung der Vergleichsprobenplatte an dem vorgegebenen Ort innerhalb der Vergleichsprobenplatte eingebettet werden oder nachträglich durch eine seitliche Bohrung in die Vergleichsprobenplatte eingebracht werden. Es ist ebenfalls denkbar, dass beispielsweise ein flacher und druckbeständiger Temperatursensor auf der Oberfläche der Vergleichsprobenplatte angeordnet und mit den üblichen Mitteln und Verfahren wie beispielsweise Verkleben oder Verschweißen festgelegt wird.

Vorzugsweise ist vorgesehen, dass die Vergleichsprobenplatte eine Wärmeleitfähigkeit von mehr als 0,7 W/(Km), vorzugsweise von mehr als 1 W/(Km) und besonders vorzugsweise von mehr als 1,4 W/(Km) aufweist.

Ein angestrebter Wert für die Wärmeleitfähigkeit des auf diese Weise modifizierten Kunststoffmaterials kann in einfacher Weise dadurch erreicht werden, dass das in das Kunststoffmaterial eingebettete Füllmaterial ein mineralisches oder keramisches Pulver oder ein Grafitpulver ist. Die Korngröße bzw. die Partikelgröße des in das Kunststoffmaterial eingebrachten Füllmaterials sollte dabei ausreichend klein sein, um eine im Wesentlichen gleichmäßige Temperaturverteilung in der Vergleichsprobenplatte gewährleisten zu können. Insbesondere sollte ausgeschlossen werden können, dass durch eine inhomogene Verteilung des Füllmaterials im Bereich des Temperatursensors lokale Schwankungen und Gradienten bei der Temperaturverteilung bzw. bei dem sich einstellenden Wärmestrom auftreten können. Durch übermäßige Inhomogenitäten innerhalb der Vergleichsprobenplatten könnte eine Bestimmung der Wärmeleitfähigkeit oder der Temperaturleitfähigkeit der Messprobe verfälscht werden.

Um die Duktilität der Vergleichsprobenplatte zu erhöhen ist vorgesehen, dass Fasern in das Kunststoffmaterial eingebettet sind.

Die Vorrichtung kann eine Druckerzeugungseinrichtung aufweisen, mit der eine Druckkraft auf die Messprobenkammer ausgeübt werden kann. Die Druckerzeugungseinrichtung kann steuerbar oder regelbar ausgestaltet sein. Im Bereich der Messprobenkammer kann ein Drucksensor angeordnet sein, um den tatsächlich auf die Messprobe ausgeübten Druck erfassen zu können.

Nachfolgend werden Ausführungsbeispiele des Erfindungsgedankens näher beschrieben, wie sie in der Zeichnung dargestellt sind. Es zeigt:
Fig. 1 eine schematische Darstellung der Messprobenkammer und der Vergleichsprobenplatte,
Fig. 2 einen schematischen Temperaturverlauf während der Durchführung von zwei Messungen mit unterschiedlichen Messproben,
Fig. 3 eine exemplarische Darstellung einer Vorrichtung, mit der die erfindungsgemäßen Messverfahren durchgeführt werden können, und
Fig. 4 eine schematische Darstellung der zwischen zwei Heizplatten angeordneten Messprobenkammer und der Vergleichsprobenplatte.

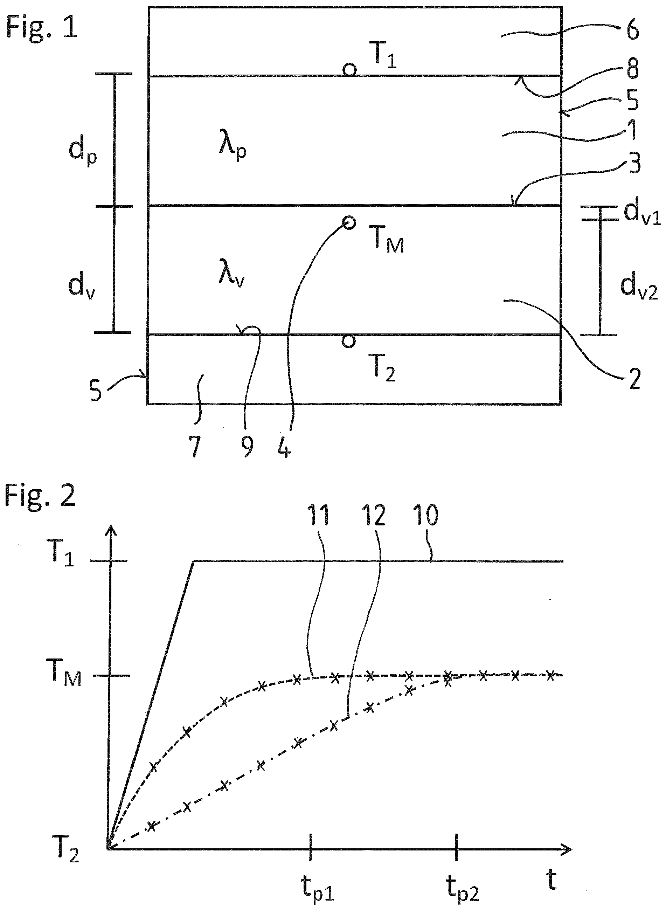

In Fig. 1 werden zur Veranschaulichung schematisch die Messprobenkammer 1 und die Vergleichsprobenplatte 2 dargestellt. Die Vergleichsprobenplatte 2 mit einer Dicke dᵥ weist eine Oberfläche 3 auf, die der Messprobenkammer 1 zugewandt ist und an der die Messprobenkammer 1 thermisch leitend angrenzt. Die Dicke der Messprobenkammer 1 wird mit dₚ bezeichnet. Die Messprobenkammer 1 und die Vergleichsprobenplatte 2 weisen beispielsweise eine kreisförmige Querschnittsfläche mit einem Radius von etwa 10 cm - 20 cm oder eine rechteckförmige Querschnittsfläche mit einer Seitenlänge von ebenfalls 10 - 20 cm auf.

Die Vergleichsprobenplatte 2 besteht aus einem geeigneten Kunststoffmaterial wie beispielsweise Polyphenylensulfid (PPS), in das mineralische und/oder keramische pulverförmige Füllmaterialien eingebettet sind und in das zur Verbesserung der duktilen Eigenschaften Glasfasern eingebettet sind. Die Wärmeleitfähigkeit λᵥ und die Temperaturleitfähigkeit kᵥ der Vergleichsprobenplatte sind durch vorausgehende Untersuchungen sehr genau ermittelt worden und bekannt. In die Messprobenkammer 1 kann eine Messprobe eingebracht werden, die entweder aus einem festen Probenkörper oder aus flüssigem Probenmaterial besteht oder aber ein Schüttgut bzw. eine Lockergesteinsprobe ist. Die durch die Messungen zu ermittelnde Wärmeleitfähigkeit der Messprobe wird mit λₚ bezeichnet.

Da die Vergleichsprobenplatte 2 aus einem Kunststoffmaterial besteht, werden die mechanischen Eigenschaften der Vergleichsprobenplatte 2 durch das Kunststoffmaterial vorgegeben. Im Gegensatz zu zerbrechlichen Vergleichsprobenplatten aus Quarzglas können ohne weiteres großflächige Vergleichsprobenplatten 2 mit einem Durchmesser oder mit Seitenkantenlängen von 1 m, 2 m oder mehr hergestellt und für Messungen verwendet werden. Auf diese Weise können störende Randeffekte weitestgehend unterdrückt werden, ohne dass zusätzliche konstruktive Maßnahmen oder korrigierende Messauswertungen erforderlich werden. Zudem können während einer Messung in dem zur Verfügung stehenden Raum auch begleitend weitere Sensoren angeordnet und gleichzeitig zusätzliche Messungen durchgeführt werden.

In der Vergleichsprobenplatte 2 ist ein Temperatursensor 4 in einem Abstand dᵥ₁ von der Oberfläche 3 der Vergleichsprobenplatte 2 mittig in der Vergleichsprobenplatte angeordnet. Durch die mittige Anordnung des Temperatursensors 4 weist dieser einen zumindest näherungsweise übereinstimmenden Abstand zu gegenüberliegenden Seitenrändern 5 der Vergleichsprobenplatte 2 auf.

Die Messprobenkammer 1 und die Vergleichsprobenplatte 2 sind in Reihe zwischen einer ersten Heizplatte 6 und einer zweiten Heizplatte 7 angeordnet. Die beiden Heizplatten 6, 7 können unabhängig voneinander jeweils durch einen Thermostaten geregelt auf eine vorgebbare Temperatur T₁ der ersten Heizplatte 6 bzw. auf eine Temperatur T₂ der zweiten Heizplatte 7 eingestellt werden.

Die an einer der Messprobenkammer 1 zugewandten Oberfläche 8 der ersten Heizplatte 1 herrschende Temperatur T₁ und die an einer der Vergleichsprobenplatte 2 zugewandten Oberfläche 9 herrschende Temperatur T₂ der zweiten Heizplatte 7 können entweder durch den Thermostaten bzw. eine geeignete Regeleinrichtung erfasst und überwacht werden, oder aber durch gesonderte, in Fig. 1 nicht dargestellte Temperatursensoren gemessen und protokolliert werden.

Wenn zwischen den beiden Heizplatten 6, 7 ein Temperaturgradient erzeugt wird, breiten sich dadurch erzwungene Temperaturänderungen innerhalb der Messprobe in der Messprobenkammer 1 sowie innerhalb der Vergleichsprobenplatte 2 aus, bis ein stationärer Zustand erreicht wird. Wenn dieser stationäre Zustand vorliegt, fließt durch die Messprobenkammer 1 und die Vergleichsprobenplatte 2 ein zeitlich und räumlich konstanter Wärmestrom. Die sich in der Messprobenkammer 1 sowie in der Vergleichsprobenplatte 2 ausbildenden Temperaturgradienten sind von der jeweiligen Wärmeleitfähigkeit λₚ der Messprobe und λᵥ der Vergleichsprobe abhängig.

In Fig. 2 wird exemplarisch ein Verlaufsdiagramm eines Messverfahrens für zwei verschiedene Messproben dargestellt. In beiden Fällen werden beide Heizplatten 6 und 7 auf die Temperatur T₂ geregelt, bis auch die Messprobe und die Vergleichsprobenplatte 2 die Temperatur T₂ aufweisen, was anhand der mit dem Temperatursensor 4 gemessenen Temperatur T_{M} überprüft werden kann. Anschließend wird in kurzer Zeit die Temperatur der ersten Heizplatte 6 auf T₁ vorgegeben und geregelt. Der Temperaturverlauf der ersten Heizplatte 6 ist mit einer durchgezogenen Linie 10 dargestellt. Während der Messdauer wird in Abständen die Temperatur T_{M} mit dem Temperatursensor 4 gemessen. Bei einer Messprobe mit einer hohen Temperaturleitfähigkeit kₚ₁ breitet sich die erzwungene Temperaturänderung rasch durch die Messprobe aus, so dass sich nach einer kurzen Zeit tₚ₁ der stationäre Zustand und damit der Temperaturwert T_{M} einstellt, der eine Bestimmung der Wärmeleitfähigkeit λₚ₁ der Messprobe ermöglicht. Der vorangehend beschriebene Temperaturverlauf ist in dem Diagramm mit einer gestrichelten Linie 11 dargestellt. Der Temperaturverlauf für eine Messprobe mit einer übereinstimmenden Wärmeleitfähigkeit λₚ₂ = λₚ₁, jedoch mit einer deutlich geringeren Temperaturleitfähigkeit kₚ₂ < kₚ₁ ist in dem Diagramm mit einer strichpunktierten Linie 12 dargestellt. Im Vergleich zu der Messprobe mit der größeren Temperaturleitfähigkeit kₚ₁ erreicht die Temperatur der Messprobe erst zu einem sehr viel späteren Zeitpunkt tₚ₂ einen stationären Zustand. Nachdem alle Temperaturmesswerte während der Temperaturänderung sowie anschließend während des stationären Zustands für eine Messprobe gemessen wurden, wird zunächst die Wärmeleitfähigkeit λₚ bestimmt und anschließend die Temperaturleitfähigkeit kₚ ermittelt.

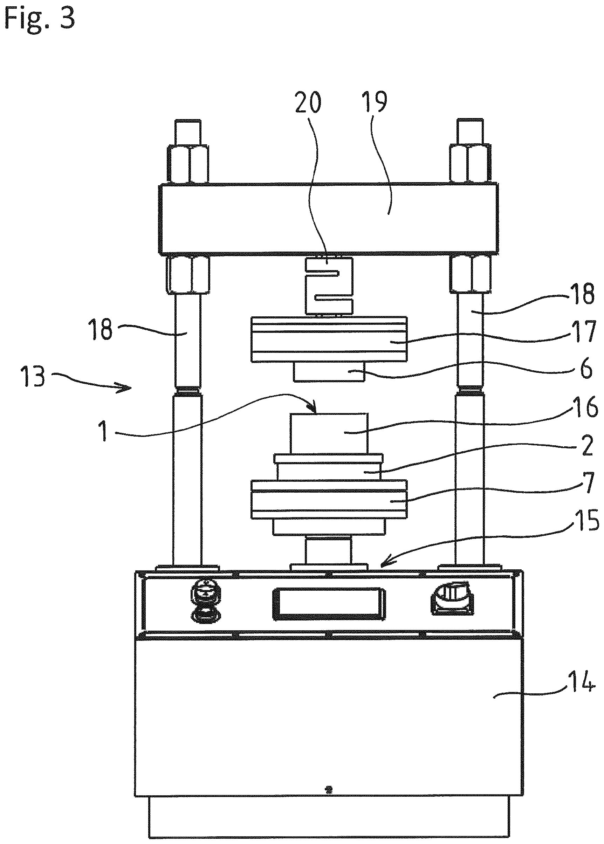

Eine in Fig. 3 exemplarisch dargestellte Vorrichtung 13 zur Bestimmung der Wärmeleitfähigkeiten und der Temperaturleitfähigkeiten einer Messprobe weist ein Gehäuse 14 auf, in welchem die für den Betrieb notwendigen Komponenten beispielsweise zur Energieversorgung, zur Ansteuerung der einzelnen Sensoren und zur Betätigung einer nicht näher dargestellten Druckvorrichtung 15 untergebracht sind. Auf dem Gehäuse 14 sind von unten nach oben dargestellt die zweite Heizplatte 7, die Vergleichsprobenplatte 2 und ein Probenhalterrahmen 16 angeordnet. Der Probenhalterrahmen 16 begrenzt die Messprobenkammer 1, die auf der Vergleichsprobenplatte 2 angeordnet ist. Nach einer Befüllung der Messprobenkammer 1 kann die Messprobenkammer 1 von unten gegen die erste Heizplatte 6 und einen Andruckstempel 17 angehoben werden. An zwei zu beiden Seiten angeordneten Führungsstangen 18 ist ein Druckbalken 19 angeordnet, an dem die erste Heizplatte 6 und der Andruckstempel 17 festgelegt sind. Über eine Kraftmesseinrichtung 20 ist der Druckstempel 17 an dem Druckbalken 19 befestigt. Durch die Druckvorrichtung 15 kann der Anpressdruck des Druckstempels 17 auf die Messprobe in der Messprobenkammer 1 und damit der während einer Messung auf die Messprobe ausgeübte Druck vorgegeben und bei Verwendung eines geeignet angeordneten Drucksensors auch geregelt werden.

Nachdem ein Messvorgang abgeschlossen wurde, kann die Messprobenkammer 1 wieder abgesenkt werden und die Messprobe freigeben. Der Probenhalterrahmen 16 ist zweckmäßigerweise lösbar auf der zweiten Heizplatte 7 oder auf der Vergleichsprobenplatte 2 angeordnet und kann zusammen mit der Messprobe entnommen werden, um eine Reinigung der Vorrichtung 13 und deren Herrichtung für eine weitere Messung zu ermöglichen.

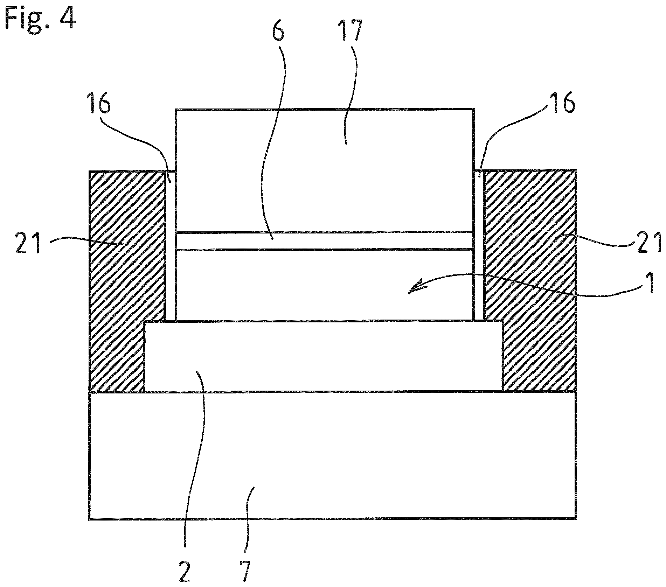

In Fig. 4 ist schematisch und vergrößert eine Teilansicht der Vorrichtung 13 im Bereich der Messprobenkammer 1 dargestellt. Auf der zweiten Heizplatte 7 ist die Vergleichsprobenplatte 2 angeordnet, wobei die zweite Heizplatte 7 seitlich übersteht, um eine Beeinträchtigung durch Randeffekte zu mindern. Auf der Vergleichsprobenplatte 2 ist der Probenhalterrahmen 16 aufgesetzt. Von oben kommend ragt die erste Heizplatte 6 an dem Druckstempel 17 in den Probenhalterrahmen 16 hinein und gibt dadurch die Messprobenkammer 1 vor, die auf beiden Seiten von der Vergleichsprobenplatte 2 und der ersten Heizplatte 6 begrenzt wird. Der Probenhalterrahmen 16 und die Vergleichsprobenplatte 2 sind von einem Isoliermantel 21 umgeben, um eine Beeinträchtigung durch äußere Einflüsse zu minimieren.

## Patentansprüche

1. Verfahren zur Bestimmung von Wärme- und Temperaturleitfähigkeiten einer Messprobe, wobei die Messprobe in einer plattenförmigen Messprobenkammer (1) in Reihe mit einer Vergleichsprobenplatte (2) zwischen einer ersten Heizplatte (6) und einer zweiten Heizplatte (7) angeordnet wird und wobei die Temperaturen T₁ und T₂ der ersten und der zweiten Heizplatte (6, 7) unabhängig voneinander geregelt werden, wobei eine Temperatur T_{M} in der Vergleichsprobenplatte in der Mitte in einem kleinen Abstand dᵥ₁ zu der der Messprobe zugewandten Oberfläche (3) der Vergleichsprobenplatte (2) gemessen wird und die Wärmeleitfähigkeit λₚ oder die Temperaturleitfähigkeit kₚ in Abhängigkeit von den vorgegebenen Temperaturen T₁ und T₂, von dem vorgegebenen Abstand dᵥ₁ und von der gemessenen Temperatur T_{M} ermittelt wird, **dadurch gekennzeichnet, dass** während der Durchführung einer Messung lediglich der Temperaturwert T_{M} gemessen wird.

2. Verfahren nach Anspruch 1, **dadurch gekennzeichnet, dass** die Temperaturen T₁ und T₂ der ersten und der zweiten Heizplatte (6, 17) konstant vorgegeben werden, dass während eines stationären Zustands die Temperatur T_{M} gemessen wird, um die Wärmeleitfähigkeit λₚ zu ermitteln.

3. Verfahren nach Anspruch 1, **dadurch gekennzeichnet, dass** mindestens eine der beiden Temperaturen T₁ und T₂ der ersten und der zweiten Heizplatte (6, 7) gemäß einem vorgebbaren Temperaturverlauf verändert wird und dabei die Temperatur T_{M} gemessen wird, um die Temperaturleitfähigkeit kₚ zu ermitteln.

4. Verfahren nach Anspruch 1, **dadurch gekennzeichnet, dass** in einem ersten Verfahrensschritt mindestens eine Temperatur T₁ und T₂ der ersten und der zweiten Heizplatte (6, 7) gemäß einem vorgebbaren Temperaturverlauf verändert und dabei die Temperatur T_{M} gemessen wird und in einem nachfolgenden Verfahrensschritt die Temperaturen T₁ und T₂ der ersten und der zweiten Heizplatte (6, 7) konstant vorgegeben werden und die Temperatur T_{M} in einem stationären Zustand gemessen wird, um anschließend die Wärmeleitfähigkeit λₚ und in Kenntnis der Wärmeleitfähigkeit λₚ die Temperaturleitfähigkeit kₚ ermittelt wird.

5. Verfahren nach einem der vorangehenden Ansprüche, **dadurch gekennzeichnet, dass** auf die Messprobe während der Messung ein vorgebbarer Druck ausgeübt wird.

6. Verfahren nach einem der vorangehenden Ansprüche, **dadurch gekennzeichnet, dass** die Messprobe während der Messung einen vorgebbaren Wassergehalt aufweist.

## Claims

1. Method for determining thermal and temperature conductivities of a measuring sample, wherein the measuring sample is arranged in a plate-shaped measuring sample chamber (1), in series with a comparison sample plate (2), between a first heating plate (6) and a second heating plate (7), and wherein the temperatures T₁ and T₂ of the first and the second heating plate (6, 7) are controlled independently from one another, wherein a temperature T_{M} in the comparison sample plate is measured in the centre of said plate, at a small spacing dᵥ₁ from the surface (3) of the comparison sample plate (2) facing the measuring sample, and the thermal conductivity λₚ or the temperature conductivity kₚ is determined on the basis of the specified temperatures T₁ and T₂, the specified spacing dᵥ₁, and the measured temperature T_{M}, **characterised in that** only the temperature value T_{M} is measured while a measuring process is carried out.

2. Method according to claim 1, **characterised in that** the temperatures T₁ and T₂ of the first and of the second heating plate (6, 17) are specified so as to be constant, **in that** the temperature T_{M} is measured during a stationary state in order to determine the thermal conductivity λₚ.

3. Method according to claim 1, **characterised in that** at least one of the two temperatures T₁ and T₂ of the first and of the second heating plate (6, 7) is changed in accordance with a specifiable temperature profile, and the temperature T_{M} is measured in the process, in order to determine the temperature conductivity kₚ.

4. Method according to claim 1, **characterised in that**, in a first method step, at least one temperature T₁ and T₂ of the first and of the second heating plate (6, 7) is changed in accordance with a specifiable temperature profile and the temperature TM is measured in the process, and, in a following method step, the temperatures T₁ and T₂ of the first and of the second heating plate (6, 7) are specified so as to be constant and the temperature T_{M} is measured in a stationary state in order to subsequently determine the thermal conductivity λₚ and, having knowledge of the thermal conductivity λₚ, to determine the temperature conductivity kₚ.

5. Method according to any of the preceding claims, **characterised in that** a specifiable pressure is applied to the measuring sample during the measuring process.

6. Method according to any of the preceding claims, **characterised in that** the measuring sample comprises a specifiable water content during the measuring process.

## Revendications

1. Procédé de détermination de conductivités de chaleur et de température d'un échantillon de mesure, l'échantillon de mesure étant disposé dans une chambre (1) d'échantillon de mesure en forme de plaque, en série avec une plaque d'échantillon de comparaison (2), entre une première plaque chauffante (6) et une deuxième plaque chauffante (7), et les températures T₁ et T₂ de la première et de la deuxième plaques chauffantes (6, 7) étant réglées indépendamment l'une de l'autre, une température T_{M} dans la plaque d'échantillon de comparaison étant mesurée au centre avec un petit écart dᵥ₁ par rapport à la surface (3), tournée vers l'échantillon de mesure, de la plaque d'échantillon de comparaison (2), et la conductivité de chaleur λₚ ou la conductivité de température kₚ étant déterminée en fonction des températures T₁ et T₂ prédéfinies, de l'écart dᵥ₁ prédéfini et de la température mesurée T_{M}, **caractérisé en ce que** seulement la valeur de température T_{M} est mesurée pendant la réalisation d'une mesure.

2. Procédé selon la revendication 1, **caractérisé en ce que** les températures T₁ et T₂ de la première et de la deuxième plaques chauffantes (6, 7) sont prédéfinies de manière constante, **en ce que** la température T_{M} est mesurée pendant un état stationnaire afin de déterminer la conductivité de chaleur λₚ.

3. Procédé selon la revendication 1, **caractérisé en ce qu'**au moins une des deux températures T₁ et T₂ de la première et de la deuxième plaques chauffantes (6, 7) est modifiée selon une courbe de température prédéfinissable, et **en ce que** la température T_{M} est en même temps mesurée afin de déterminer la conductivité de température kₚ.

4. Procédé selon la revendication 1, **caractérisé en ce que** pendant une première étape du procédé, au moins une température T₁ et T₂ de la première et de la deuxième plaques chauffantes (6, 7) est modifiée selon une courbe de température prédéfinissable, et **en ce que** la température T_{M} est en même temps mesurée, et **en ce que** dans une étape suivante du procédé, les températures T₁ et T₂ de la première et de la deuxième plaques chauffantes (6, 7) sont prédéfinies de manière constante, et **en ce que** la température T_{M} est mesurée pendant un état stationnaire afin de déterminer ensuite la conductivité de chaleur λₚ et, en connaissance de la conductivité de chaleur λₚ, afin de déterminer la conductivité de température kₚ.

5. Procédé selon l'une quelconque des revendications précédentes, **caractérisé en ce qu'**une pression prédéfinissable est exercée sur l'échantillon de mesure pendant la mesure.

6. Procédé selon l'une quelconque des revendications précédentes, **caractérisé en ce que** pendant la mesure, l'échantillon de mesure présente une teneur en eau prédéfinissable.
